# EUROPEAN PATENT SPECIFICATION

(11) **EP 4 263 088 B1**
(45) Date of publication and mention of the grant of the patent: **08.07.2026**
(21) Application number: 21839210.8
(22) Date of filing: 17.12.2021
(51) Int. Cl.: B22D 1/00, C21C 1/02, C21C 7/00, C21C 7/064, C21C 7/072, C21C 7/076, C21C 5/46

(54) **ROTARY DEVICE FOR TREATING MOLTEN METAL**
DREHVORRICHTUNG ZUR BEHANDLUNG VON GESCHMOLZENEM METALL
DISPOSITIF ROTATIF POUR LE TRAITEMENT D'UN MÉTAL EN FUSION

(30) Priority: 17.12.2020 EP 20215161
(43) Date of publication of application: 25.10.2023
(73) Proprietor: FOSECO INTERNATIONAL LIMITED, London EC4A 2AE (GB)
(72) Inventor: HRABINA, David, 75002 Prerov (CZ); POWELL, Colin, Barlborough Links Derbyshire S43 4XA (GB)
(74) Representative: Marks & Clerk LLP
(86) International application number: PCT/EP2021/086609
(87) International publication number: WO 2022/129584

(56) References cited:
- CN-A- 106 435 216
- CN-U- 210 560 654
- DE-A1- 2 700 684
- EA-B1- 016 954
- JP-A- 2004 136 367
- JP-A- S6 245 464
- RU-C2- 2 247 289
- US-A- 4 176 769

## Description

### Technical field

The present invention relates to a rotary device and methods for treating molten metal. In particular, the present invention relates to a rotary device and methods for removing unwanted impurities from molten metal, such as sulphur, dissolved gas and solid inclusions, and incorporating metal treatment additives into the molten metal. The present invention also relates to a tubular sleeve for a rotary device and the use of a rotary device in the treatment of molten metal.

### Background

Unwanted impurities in molten metal can cause significant issues in metal casting processes, adversely affecting the quality of the finished casting. For example, solid inclusions (typically solid oxides such as alumina and silica) can create defects and discontinuities in the metal and clog up the nozzles used in casting, while dissolved gases (such as hydrogen gas) can cause undesirable porosity and/or brittleness. Ferrous metals - in particular steel - may also comprise residual sulphur from raw materials used in the melting process, which increases the brittleness of the casting. It is therefore important to remove as many impurities from the molten metal as possible, to improve the quality of the finished casting.

Dissolved gases and solid inclusions are commonly removed by purging the molten metal with a gas or mixture of gases which is insoluble in the metal, such as argon, nitrogen and/or carbon monoxide. The bubbles of purge gas capture dissolved hydrogen and solid inclusions they encounter while travelling through the molten metal, and lift them to the surface. Traditionally, such purging has been performed by a porous plug in the base of the melting furnace or casting ladle, which bubbles the purge gas up through the metal. Another method of purging lower temperature and lower density molten metals, such as aluminium (which has a melting point of around 660 °C and a density of around 2.4 g/cm³ when molten), is by injecting gas into the metal through a hollow shaft with a rotor attached to the end, which is rotated to disperse the injected gas into the molten metal. This method produces finer bubbles than using a porous plug, due to the injected bubbles being chopped up by the spinning rotor head, which improves stirring efficiency and allows finer inclusions to be lifted out of the molten metal. In this case, the process may be referred to as "degassing".

Degassing rotors are not conventionally used in higher temperature and higher density metals, such as iron and steel, for a number of reasons. Iron and steel both have a melting point of around 1150-1550 °C and a density of around 7 g/cm³ when molten. Conventional refractory ceramic materials, which rotors for aluminium are typically made from, require priming to temperature before immersing in molten iron or steel, otherwise they will shatter due to thermal shock. Such priming to temperature is a difficult and time-consuming procedure. The extreme temperature and density of molten iron/steel may also quickly warp and deform the rotor head during use, depending on the material the rotor is made from, which reduces the stirring and purging efficiency of the rotor. Molten steel - in particular the slag layer on the surface of the metal, but also the bulk metal itself - can also be corrosive to some refractory ceramic materials, and some refractory materials which are used to make rotors for molten aluminium (e.g. graphite) may dissolve in molten steel. As such, conventional rotors are challenging to use and tend to have a very short lifetime in higher temperature metals such as iron and steel, so the use of porous plugs is generally preferred in these applications.

Desulphurisation of ferrous metals can be performed in several different ways. One method involves treatment of the molten metal with a desulphurising additive in a Kanbara Reactor, which comprises an extremely large vessel (typically having a capacity of at least 100 tons) and a cruciform-shaped impeller for stirring the molten metal. The desulphurising additive (typically powdered calcium oxide) is mixed into the molten metal by rotation of the impeller, where the additive reacts with the sulphur in the metal to form a solid product (e.g. calcium sulfide) which eventually floats to the surface of the metal to form a layer of slag, which can be removed by skimming. In Kanbara Reactor desulphurisation, the impeller must be primed to temperature before immersion in the molten metal to avoid cracking, as mentioned above.

Another method for desulphurising ferrous metals involves treatment of the molten metal with a desulphurising additive in the form of a cored wire, which is fed into the metal from a spool. The cored wire comprises a core of desulphurising additive (typically containing calcium and/or magnesium), surrounded by a sheath of high melting point material (e.g. steel). The sheath protects the additive core from immediately oxidising on contact with the molten metal and gradually melts or dissolves as the wire is fed into the metal, releasing the additive core at a predetermined depth below the surface so that it can permeate up through the head of molten metal. The feeding rate of the wire into the molten metal is balanced with the melting/dissolution rate of the outer sheath to ensure that the additive is released at the desired depth. This method is usually combined with the use of a porous plug, which bubbles gas through the metal and helps to disperse the additive.

In addition to (or instead of) desulphurisation, metal treatment additives can also be used to modify the composition, morphology and/or distribution of inclusions which remain after purging. For example, calcium additives may be used in molten steel to react with solid oxide inclusions (such as alumina or silica) and form lower melting point calcium aluminates or silicates, which are liquid at the melting point of steel and thus do not clog up casting nozzles. Additives may also alter the morphology of dendritic or plate-like inclusions, which can create fault-lines in the cast metal that are prone to cracking, so that the inclusions become more globular and thus do not form such fault-lines. For example, calcium additives may be used in steel to alter the morphology of solid oxide inclusions, while magnesium additives may be used in iron to alter the morphology of carbon inclusions.

Introducing elemental calcium or magnesium into molten ferrous metals can be difficult and dangerous, since the boiling points of calcium and magnesium are below the melting points of steel and iron, respectively. Elemental Ca/Mg may therefore vapourise explosively upon contact with the molten iron/steel, if too much is added at once, or quickly oxidise. Consequently, the additives are usually added in stabilised forms such as calcium silicon (CaSi), calcium silicon barium (CaSiBa), etc., rather than in elemental form.

CN106435216 discloses a pumping rotor comprising graphite. CN210560564 discloses a rotor having a graphite component. JPS6245464 and RU2247289 disclose rotors for metal treatment. EA016954 discloses a rotor for aluminium treatment.

The present invention is aimed at providing an improved apparatus and method for treating molten metal, or at least to provide a useful alternative.

### Summary of the invention

### Rotary device

In accordance with a first aspect of the invention, there is provided a rotary device (also referred to herein as a "rotor") for treating a molten metal with gas. The device comprises a tubular sleeve comprising a rotor head at one end, and a hollow shaft extending inside the tubular sleeve such that at least a portion of the hollow shaft is enclosed by the tubular sleeve. The rotor head comprises a gas outlet for discharging gas into the molten metal, and the hollow shaft is fluidly connected to the gas outlet of the rotor head. The tubular sleeve and rotor head are formed from a refractory material that is resistant to corrosion and thermal shock. The hollow shaft is formed from a refractory material comprising graphite.

The inventors of the present invention have found that a two-part rotor, comprising an internal hollow shaft made from a material comprising graphite and an outer tubular sleeve and rotor head made from a more resistant refractory material, has excellent durability and longevity in higher temperature molten metals such as steel. Embodiments of the invention showed little to no deformation after repeated testing in molten steel, while also achieving good stirring and purging efficiency. A hollow shaft comprising graphite was found to be suitably resistant to the high temperatures of molten steel without melting or shattering, while also having a sufficient degree of plasticity to be mounted on a motor without breaking in use. Without wishing to be bound by theory, it is thought that an inner shaft made from metal would soften too much under the temperatures experienced in molten iron/steel, and an inner shaft made from ceramic materials would be too brittle for mounting on a motor. The inventors have therefore found graphite to be particularly suitable for use in the hollow shaft of the present invention. Although graphite would not normally be considered suitable for use in molten steel, since graphite can dissolve in molten steel, in the present invention the hollow shaft comprising graphite is protected by the outer tubular sleeve.

In embodiments, the tubular sleeve is formed from a refractory material comprising fused silica, silicon carbide, alumina, carbon-bonded alumina, carbon-bonded ceramics, clay graphite, silicon alumina nitride, isostatically pressed (also known as isopressed) refractory mixtures comprising metal oxides, carbides, or nitrides, or refractory substrates coated with alumina and/or magnesium zirconates or metal oxides or a combination thereof. The rotor head may also be formed from a refractory material comprising fused silica, silicon carbide, alumina, carbon-bonded alumina, carbon-bonded ceramics, clay graphite, silicon alumina nitride, isopressed refractory mixtures comprising metal oxides, carbides, or nitrides, or refractory substrates coated with alumina and/or magnesium zirconates or metal oxides or a combination thereof. In some embodiments, the tubular sleeve and the rotor head are both made from the same material. In alternative embodiments, the tubular sleeve and the rotor head are made from different materials.

Highly resistant refractory materials including fused silica, silicon carbide, alumina, carbon-bonded alumina, carbon-bonded ceramics, clay graphite, silicon alumina nitride, isopressed refractory mixtures comprising metal oxides, carbides, or nitrides, or refractory substrates coated with alumina and/or magnesium zirconates or metal oxides or combinations thereof have sufficient resistance to corrosion and thermal shock to be used in molten steel without degradation or the need for priming. However, these materials can be very expensive. Moreover, these materials are relatively brittle and the inventors of the present invention have found that they do not have the necessary plasticity for mounting on a motor. Without wishing to be bound by theory, it is thought that single-part rotors made entirely from such highly resistant materials may be vulnerable to vibrations in use, and may crack in the vicinity of the mounting point with the motor, rendering the rotor unstable and eventually breaking completely. The rotary device of the present invention, comprising only an outer sleeve made from such materials, addresses both of these issues, by reducing the amount of highly resistant refractory material required and by providing an inner shaft made from a more plastic refractory material (comprising graphite) which is less susceptible to cracking when mounted on a motor.

In embodiments, the tubular sleeve and/or rotor head are formed from a refractory material comprising isopressed carbon-bonded alumina, for example the refractory material manufactured by Vesuvius Plc. under the tradename Viso^{™}. The inventors of the present invention have found that rotors made using isopressed carbon-bonded alumina are particularly durable, lasting for up to 18 uses without deformation, before a build-up of slag prevented the rotor from further use.

In embodiments, the rotor head is integrally formed with the tubular sleeve. In other embodiments, the rotor head is a separate component that is coupled to the end of the tubular sleeve. In such embodiments, the rotor head may be coupled to the end of the tubular sleeve by any suitable means, e.g. threading, push-fit, etc.

The hollow shaft has a first end and a second end, wherein the first end of the hollow shaft is enclosed by the tubular sleeve. In embodiments, the second end of the hollow shaft is configured to be coupled to an apparatus for rotating the rotary device (e.g. a motor). For example, the second end of the hollow shaft may comprise a pulley configured to be connected to a motor by a V-belt, or the second end of the hollow shaft may be configured to be mounted directly onto a motor shaft. In some embodiments, or the second end of the hollow shaft may be configured to receive a collar which comprises a pulley for a V-belt, or a collar which is configured to be coupled to a motor shaft by other means, e.g. by providing a flange with apertures for bolts.

The hollow shaft may have a length measured between the first and second ends. In embodiments, at least 50%, at least 60%, at least 70%, at least 80% or at least 90% of the length of the hollow shaft is enclosed by the tubular sleeve. In embodiments, the hollow shaft is substantially completely enclosed by the tubular sleeve, although it will be understood that in such embodiments the tubular sleeve is open in the vicinity of the second end of the hollow shaft, such that the second end of the hollow shaft may still be coupled to an apparatus for rotating the rotary device.

The first end of the hollow shaft (which is enclosed by the tubular sleeve) comprises a locking portion configured to engage with a complementary receiving portion inside the tubular sleeve. The locking and receiving portions may not only help to fix the tubular sleeve securely to the hollow shaft, but also lock the hollow shaft and tubular sleeve into mutual rotation, preventing the hollow shaft from spinning independently of the tubular sleeve in use. The complementary receiving portion may be located at the end of the tubular sleeve comprising the rotor head. In use, the tubular sleeve may soften and although supported by the internal graphite hollow shaft, some twisting may occur at the rotor. By providing the receiving portion at the end of the tubular sleeve comprising the rotor head, there is less twisting of the tubular sleeve than would be the case if it were to be driven from the end away from the rotor head. It will be appreciated that the receiving portion does not necessarily have to be at the absolute end of the tubular sleeve and may be positioned spaced away from the absolute end.

In embodiments, the locking portion and the receiving portion have a polygonal cross-section. It will be understood that in such embodiments the locking portion and the receiving portion will have the same polygonal cross-section, with the locking portion being slightly smaller in diameter so as to fit snugly inside the receiving portion. The edges of the locking portion abut against the edges of the receiving portion, preventing the locking portion from rotating within the receiving portion. In some embodiments, the polygonal cross-section comprises at least 3, 4, 5 or 6 vertices. Preferably, the polygonal cross-section comprises no more than 12, 11 or 10 vertices, to ensure that the angle formed between the edges of the polygon is acute enough to prevent the vertices of the locking portion from being able to slide between adjacent vertices of the receiving portion. In other embodiments, the locking portion and the receiving portion have a cross-section which is circular with chords removed.

The tubular sleeve may have a length measured along its longitudinal axis. In some embodiments, the hollow shaft extends inside the tubular sleeve along at least 30%, at least 40%, at least 50%, at least 60%, at least 70%, at least 80% or at least 90% of the length of the tubular sleeve. As such, the hollow shaft may terminate above the rotor head, as opposed to extending into the rotor head. In embodiments, the hollow shaft extends inside the tubular sleeve along substantially the entire length of the tubular sleeve, such that the first end of the hollow shaft is located directly adjacent to the rotor head. In embodiments where the hollow shaft does not extend inside the tubular sleeve along substantially the entire length of the tubular sleeve, and where the first end of the hollow shaft is not directly adjacent to the rotor head, the tubular sleeve may comprise a conduit or bore which fluidly connects the hollow shaft to the gas outlet of the rotor head.

In some embodiments, the second end of the hollow shaft may be secured to the tubular sleeve by clamping means.

The rotor head may be of any suitable shape or configuration for stirring molten metal.

In embodiments, the rotor head comprises a planar surface (or plate) extending in a direction perpendicular to the longitudinal axis of the tubular sleeve, and a plurality of vanes projecting from the planar surface in a direction substantially parallel to the longitudinal axis of the tubular sleeve. In such embodiments, the gas outlet may comprise a bore in the planar surface. In embodiments, the bore is located in the centre of the planar surface. In some embodiments, the rotor head comprises a second planar surface (or plate) oppositely disposed the first planar surface and connected thereto by a plurality of vanes or pillars. Such embodiments may also comprise vanes projecting from the base of the second plate. The plate(s) may be substantially circular or polygonal in shape, e.g. square-shaped. In embodiments, the plate(s) may be approximately square-shaped with concave edges and truncated corners.

Single-plate rotor head designs have been found to be easier to manufacture by pressing techniques (for example using materials such as isopressed carbon-bonded alumina) than dual-plate designs. Although dual-plate rotor head designs can be manufactured by pressing techniques, it was found that full densification could not always be achieved across the entire rotor head. Single-plate rotor head designs may increase the amount of downward flow away from the rotor head, whereas dual-plate rotor head designs may increase the amount of lateral flow away from the rotor head.

The hollow shaft and the tubular sleeve may be coupled together via a friction fit. Other coupling means and mechanisms may also be used.

According to a second aspect of the invention, there is provided a tubular sleeve for use with the rotary device of the first aspect.

The tubular sleeve may be formed from a refractory material comprising fused silica, silicon carbide, alumina, carbon-bonded alumina, carbon-bonded ceramics, clay graphite, silicon alumina nitride, isopressed refractory mixtures comprising metal oxides, carbides, or nitrides, or refractory substrates coated with alumina and/or magnesium zirconates or metal oxides, or a combination thereof.

In some embodiments, the tubular sleeve comprises a rotor head integrally formed at one end, the rotor head comprising a gas outlet. In other embodiments, the tubular sleeve comprises means for coupling to a separate rotor head at one end, e.g. threading means.

The tubular sleeve of the second aspect may have a length measured along its longitudinal axis. In embodiments, the tubular sleeve comprises a bore for receiving a hollow shaft, wherein the bore extends inside the tubular sleeve along at least 30%, at least 40%, at least 50%, at least 60%, at least 70%, at least 80% or at least 90% of the length of the tubular sleeve. In embodiments, the bore for receiving the hollow shaft extends inside the tubular sleeve along substantially the entire length of the tubular sleeve. In embodiments where the bore for receiving the hollow shaft does not extend inside the tubular sleeve along substantially the entire length of the tubular sleeve, the tubular sleeve may comprise a further conduit or bore for fluidly connecting the bore for receiving the hollow shaft to the gas outlet of the rotor head or to the means for coupling to the rotor head.

The tubular sleeve comprises a receiving portion configured to engage with a complementary locking portion on the hollow shaft. In some embodiments, the receiving portion has a polygonal cross-section. In some embodiments, the polygonal cross-section comprises at least 3, 4, 5 or 6 vertices. In some embodiments, the polygonal cross-section comprises no more than 12, 11 or 10 vertices. In other embodiments, the locking portion and the receiving portion have a cross-section which is circular with chords removed.

It will be understood that any of the optional features and embodiments described in relation to the first aspect may apply equally to the second aspect.

### Method for treating molten metal

In accordance with a third aspect of the invention, there is provided a method for treating molten metal. The method comprises:
applying a layer of synthetic slag material to an exposed surface of the molten metal;
stirring the molten metal using a rotary device comprising a rotor head, such that the molten metal flows past the layer of synthetic slag material on the surface.

In embodiments, the molten metal is stirred such that at least a portion of the layer of synthetic slag material remains on the surface during stirring.

In embodiments, the method further comprises discharging gas into the molten metal through the rotor head. In embodiments, the gas comprises one or more gases which are not soluble in the molten metal. In embodiments, the gas comprises argon, nitrogen, carbon monoxide or mixtures thereof.

The inventors of the present invention have found that the combination of applying a layer of synthetic slag material (also known as flux) to the metal and stirring the metal with a rotary device to flow past the surface layer of synthetic slag is highly effective at removing sulphur from the molten metal. Without wishing to be bound by theory, it is thought that the use of a rotary device to stir the metal improves the circulation of metal flowing past the surface layer of synthetic slag, allowing more sulphur to be captured by the synthetic slag. Furthermore, discharging gas into the molten metal through the rotor head improves removal of solid inclusions and dissolved gases. The method of the present invention therefore provides a highly efficient and effective method for simultaneously removing inclusions, degassing and desulphurising molten metal.

The molten metal is a ferrous metal. In embodiments, the molten metal is iron or steel.

The rotary device is a rotary device according to the first aspect, which is particularly suitable for stirring higher temperature and higher density molten metals, such as iron or steel.

In embodiments, the synthetic slag material comprises one or more of calcium oxide, alumina, silica, magnesia, sodium oxide, potassium oxide, iron (III) oxide, carbon dioxide and fluorine. In some embodiments, the synthetic slag material comprises from 50 to 90 wt% calcium oxide. In embodiments, the synthetic slag material comprises from 5 to 30 wt% alumina. In embodiments, the synthetic slag material comprises up to 5 wt% silica, magnesia, sodium oxide, potassium oxide, iron (III) oxide, carbon dioxide and/or fluorine.

In embodiments, the method further comprises feeding a cored wire comprising a metal treatment additive into the molten metal. In embodiments, the cored wire comprises an outer sheath comprising a high melting point metal, such as iron or steel, and an inner core comprising the metal treatment additive. In embodiments, the metal treatment additive comprises a desulphurising additive, an inclusion modification additive, or mixtures thereof. An inclusion modification additive is an additive for modifying the composition, morphology and/or distribution of solid inclusions in the molten metal, as previously described. In embodiments, the metal treatment additive comprises magnesium, ferrosilicon magnesium, calcium, calcium oxide, calcium carbide, barium, strontium, or combinations thereof, in elemental or compound form.

In use, the outer sheath protects the core additive from immediate reaction or oxidation and gradually melts or dissolves to release the additive at a predetermined depth under the surface of the molten metal. The combination of treatment with a cored wire and synthetic slag can further improve desulphurisation and/or treatment and removal of inclusions in the molten metal.

In embodiments, the method comprises discharging a solid metal treatment additive through the rotor head or adjacent to it. In embodiments, the additive is in the form of a wire or a powder. In embodiments, the additive is comprised in a cored wire. Discharging an additive through the rotor head or adjacent to it allows the additive to be quickly and efficiently dispersed throughout the molten metal. The inventors of the present invention have found that this rapid dispersion allows elemental Ca/Mg to be used as the additive with a significant reduction of the hazards usually associated with using elemental Ca/Mg in molten metals, since the Ca/Mg is quickly dispersed throughout the metal before it vapourises or oxidises. This in turn also decreases the amount of additive required to effectively treat the molten metal, reducing build-up of excess additive which can cause brittleness in the finished casting.

Discharging the additive through the rotor head, in particular, also shields the additive from exposure to the molten metal while it is contained within the rotary device and allows it to be released into the molten metal at a depth corresponding to the depth of the rotor head, so a protective coating is not necessarily required. However, a cored wire comprising a protective coating may be used for convenience, where other forms of metal treatment additive are not available, or in cases where it is necessary for the additive to reach a lower depth before release into the molten metal.

In some embodiments, the rotary device is rotated at a speed of at least 50, at least 100, at least 200 or at least 300 rpm to stir the molten metal. In some embodiments, the rotary device is rotated at a speed of no more than 600, no more than 500, no more than 400 or no more than 300 rpm to stir the molten metal. In some embodiments, the rotary device is rotated at a speed of from 50 to 600 rpm, from 100 to 300 rpm, or from 100 to 200 rpm, for example 150 rpm. Higher rotation speeds may increase the overall flow velocity and amount of downward flow from the rotor head (i.e. increased bottom stirring), but may also increase air entrainment into the molten metal. Increasing the rotation speed beyond 600 rpm may cause formation of a vortex, which entrains air back into the melt with deleterious effects. In some embodiments, the rotation speed is varied during the method. In some embodiments, the rotation speed may decrease from a higher starting rotation speed during the method, since the density of the molten metal increases as the metal gets cooler, increasing the power required for stirring. For example, the rotation speed of the rotary device may start at 200 rpm and decrease to 120 rpm during the method.

The method of the third aspect may be suitable for use in any ladle or furnace, including a coreless induction furnace (CIF) or ladle furnace (LF). In embodiments where the method is used in a ladle, the molten metal may be poured into the ladle (tapped) from an electric arc furnace (EAF) or CIF. The method of the third aspect is particularly suitable for treating molten steel, but may also be used to treat other molten metals which require desulphurisation and/or inclusion removal, e.g. iron.

In accordance with a fourth aspect of the invention, there is provided a method for treating molten metal. The method comprises:
applying a metal treatment agent to molten metal;
stirring the molten metal using a rotary device comprising a rotor head; and
discharging gas into the molten metal through the rotor head.

The molten metal is a ferrous metal. In some embodiments, the molten metal is iron or steel.

In embodiments, the metal treatment agent comprises at least one metal treatment additive selected from desulphurising additives, inclusion modification additives, or mixtures thereof. An inclusion modification additive is an additive for modifying the composition, morphology and/or distribution of solid inclusions in the molten metal, as previously described. In embodiments, the at least one metal treatment additive comprises magnesium, ferrosilicon magnesium, calcium, calcium oxide, calcium carbide, barium, strontium, or combinations thereof, in elemental or compound form.

In embodiments, the metal treatment agent comprises a desulphurising agent which is applied in the form of a synthetic slag material on the surface of the molten metal. In some such embodiments, the molten metal is stirred with the rotary device such that at least a portion of the synthetic slag material remains in a layer on the surface during stirring and the molten metal flows past the layer of synthetic slag material on the surface.

In embodiments, the synthetic slag material comprises one or more of calcium oxide, alumina, silica, magnesia, sodium oxide, potassium oxide, iron (III) oxide, carbon dioxide and fluorine. In some embodiments, the synthetic slag material comprises from 50 to 90 wt% calcium oxide. In embodiments, the synthetic slag material comprises from 5 to 30 wt% alumina. In embodiments, the synthetic slag material comprises up to 5 wt% silica, magnesia, sodium oxide, potassium oxide, iron (III) oxide, carbon dioxide and/or fluorine.

In embodiments, the metal treatment agent is applied in the form of a powder on the surface of the molten metal. In some such embodiments, the molten metal is stirred with the rotary device such that the powder is entrained in and dispersed throughout the molten metal.

In embodiments, the metal treatment agent is applied in the form of a wire which is fed into the molten metal. In embodiments, the wire is a cored wire comprising a protective outer sheath, as described above in relation to the third aspect. In embodiments, the wire is fed into the molten metal in conjunction with the rotary device.

In some embodiments, the rotary device is rotated at a speed of at least 50, at least 100, at least 200 or at least 300 rpm to stir the molten metal. In some embodiments, the rotary device is rotated at a speed of no more than 600, no more than 500, no more than 400 or no more than 300 rpm to stir the molten metal. In some embodiments, the rotary device is rotated at a speed of from 50 to 600 rpm, from 100 to 300 rpm, or from 100 to 200 rpm, for example 150 rpm. Higher rotation speeds may increase the overall flow velocity and amount of downward flow from the rotor head (i.e. increased bottom stirring), but may also increase air entrainment into the molten metal. Increasing the rotation speed beyond 600 rpm may cause formation of a vortex, which entrains air back into the melt with deleterious effects. In some embodiments, the rotation speed is varied during the method. In some embodiments, the rotation speed may decrease from a higher starting rotation speed during the method, since the density of the molten metal increases as the metal gets cooler, increasing the power required for stirring. For example, the rotation speed of the rotary device may start at 200 rpm and decrease to 120 rpm during the method.

The method of the fourth aspect may be suitable for use in any ladle or furnace, including a coreless induction furnace (CIF) or ladle furnace (LF). In embodiments where the method is used in a ladle, the molten metal may be poured into the ladle (tapped) from an electric arc furnace (EAF) or CIF. The method of the third aspect is particularly suitable for treating molten steel, but may also be used to treat other molten metals which require desulphurisation and/or inclusion removal, e.g. iron.

The rotary device is a rotary device according to the first aspect.

In accordance with a fifth aspect of the invention, there is provided the use of a rotary device according to the first aspect of the present invention in the treatment of molten metal. Preferably, the molten metal is molten steel.

It will be understood that any of the optional features and embodiments described in relation to the method of the third aspect may apply equally to the method of the fourth aspect.

### Brief description of the drawings

Embodiments of the invention will now be described, by way of example only, with reference to the accompanying schematic drawings in which corresponding reference symbols indicate corresponding parts, and in which:
Figure 1 shows a rotary device according to an embodiment of the present invention;
Figure 2 is a cross-sectional view of the rotary device shown in Figure 1;
Figure 3 shows a hollow shaft for use with a rotary device according to an embodiment of the present invention;
Figure 4 is a cross-sectional view of the hollow shaft shown in Figure 3;
Figure 5 shows a rotary device according to an embodiment of the present invention;
Figure 6 is a cross-sectional view of the rotary device shown in Figure 5;
Figure 7 is a schematic view of a rotary device according to an embodiment of the present invention, assembled with a stirring apparatus for use in stirring and treating molten metal;
Figure 8 shows velocity field simulation data for (a) a dual-plate rotor head design, and (b) a single-plate rotor head design rotating at 600 rpm;
Figure 9 shows scaled flow pattern simulation data corresponding to the velocity field simulation data shown in Figure 10; and
Figure 10 shows velocity field and scaled flow pattern simulation data for a single-plate rotor head design rotating at (a) 100 rpm, (b) 200 rpm, and (c) 300 rpm.

### Detailed description

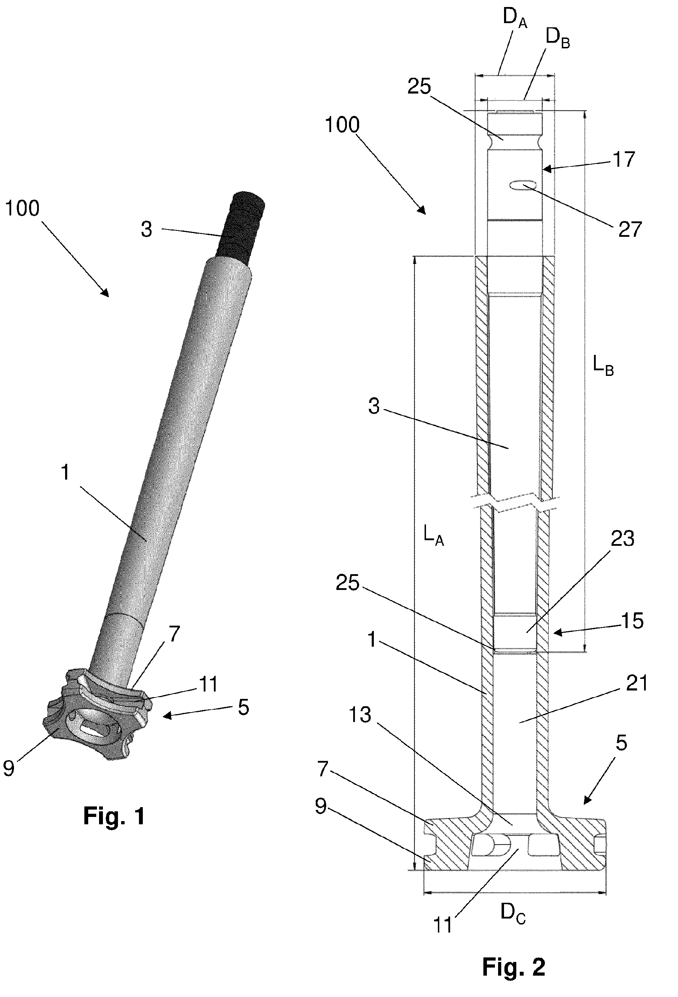

Figures 1 and 2 show a rotary device 100 according to an embodiment of the present invention. The rotary device 100 comprises a tubular sleeve 1 and a hollow shaft 3 extending inside the tubular sleeve 1.

The tubular sleeve 1 comprises a rotor head 5 integrally formed at one end. The rotor head 5 is a standard dual-plate design comprising a first planar surface (or plate) 7 and a second plate 9, each extending perpendicular to the longitudinal axis of the tubular sleeve 1. The first plate 7 and second plate 9 are connected to each other by a plurality of pillars 11. The rotor head 5 further comprises a gas outlet 13 for discharging gas into molten metal, in the form of a bore extending through the first plate 7.

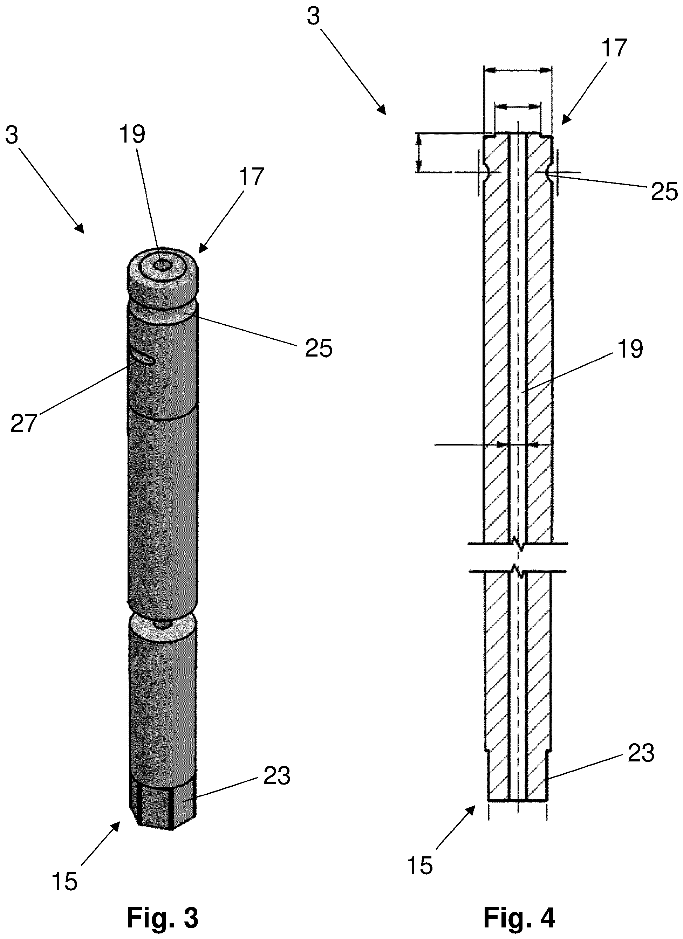

The hollow shaft 3 comprises a first end 15 and a second end 17, with the first end 15 being enclosed within the tubular sleeve 1. The hollow shaft 3 further comprises a bore 19 extending therethrough (as shown in Figure 3). The tubular sleeve 1 comprises a conduit 21 which fluidly connects the bore 19 of the hollow shaft 3 to the gas outlet 13 of the rotor head 5, such that gas and/or solid metal treatment additives may flow through the hollow shaft 3 and out through the rotor head 5 into the molten metal in use. In some embodiments (not shown), the hollow shaft 3 may comprise a plurality of bores extending therethrough, so that gas and solid metal treatment additives may be delivered separately through the hollow shaft 3.

The first end 15 of the hollow shaft 3 comprises a locking portion 23 which engages with a complementary receiving portion 25 in the tubular sleeve 1. The locking portion 23 has a cross-sectional shape which is circular with six adjacent chords removed, i.e. the locking portion 23 has a cross-section which is generally hexagonal. The receiving portion 25 in the tubular sleeve 1 has a corresponding cross-sectional shape, such that the edges and vertices of the locking portion 23 abut against the receiving portion 25 and prevent independent rotation of the hollow shaft 3 inside the tubular sleeve 1.

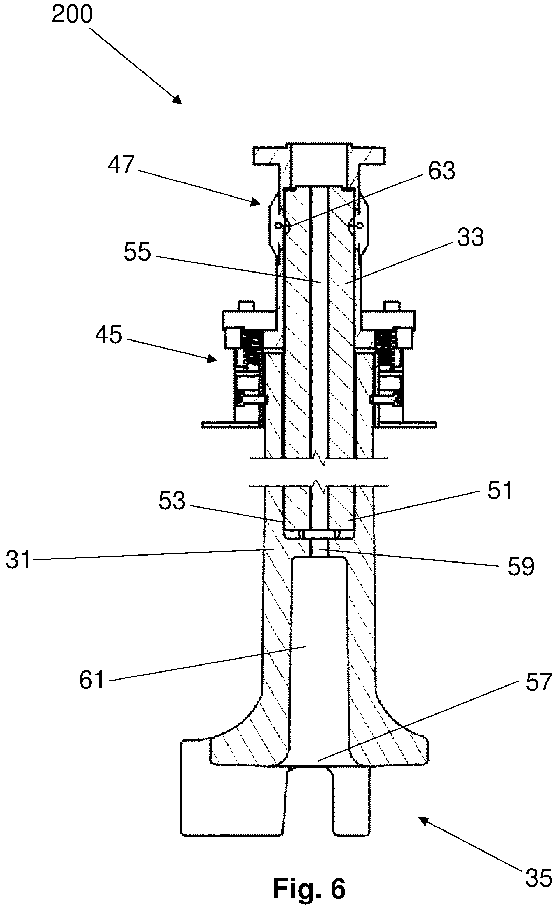

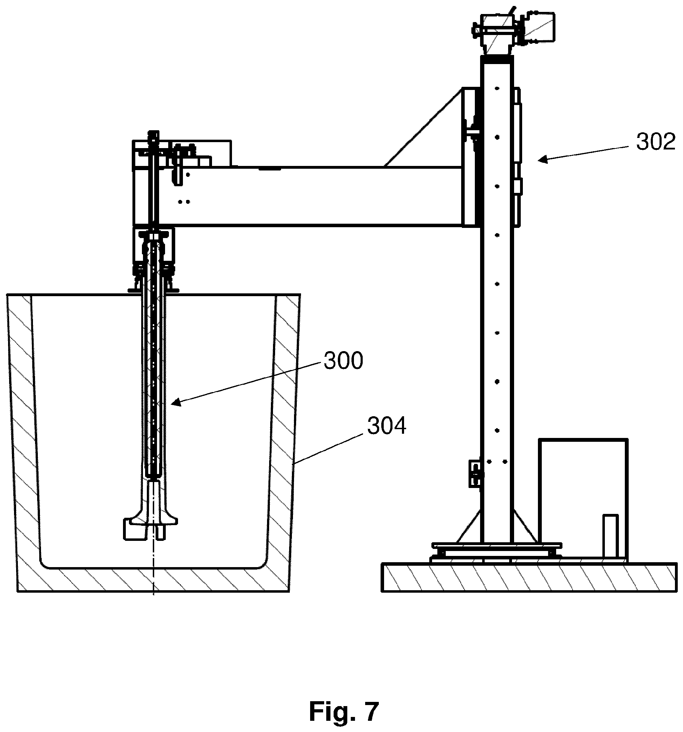

The second end 17 of the hollow shaft 3 protrudes from the tubular sleeve 1 and is configured to be coupled to an apparatus for rotating the rotary device 100 (for example, as shown in Figure 7). In the illustrated embodiment, the second end 17 of the hollow shaft comprises a circumferential groove 25. The circumferential groove 25 may act as a pulley for connecting to a motor via a V-belt. Alternatively, the circumferential groove 25 may be configured to engage with a collar (for example, as shown in Figure 6), which in turn may act as a pulley for connecting to a motor via a V-belt or as a flange for connecting to a motor shaft by other means, e.g. nuts and bolts. In the illustrated embodiment, the second end 17 of the hollow shaft 3 further comprises an indent 27 for engaging with clamping means which secure the hollow shaft 3 to the tubular sleeve 1 (for example, as shown in Figure 7).

The tubular sleeve 1 has a length L_{A} as measured along the longitudinal axis of the tubular sleeve 1. The hollow shaft 3 has a length L_{B} as measured along the longitudinal axis. The tubular sleeve 1 tapers inwardly along its length from a maximum diameter D_{A}, such that the diameter of the tubular sleeve reduces slightly towards the rotor head 5. The hollow shaft 3 also tapers inwardly along its length from a maximum diameter D_{B} at the first end 17 to a minimum diameter at the second end 15, corresponding to the internal dimensions of the tubular sleeve 1. The rotor head has a diameter D_{C}.

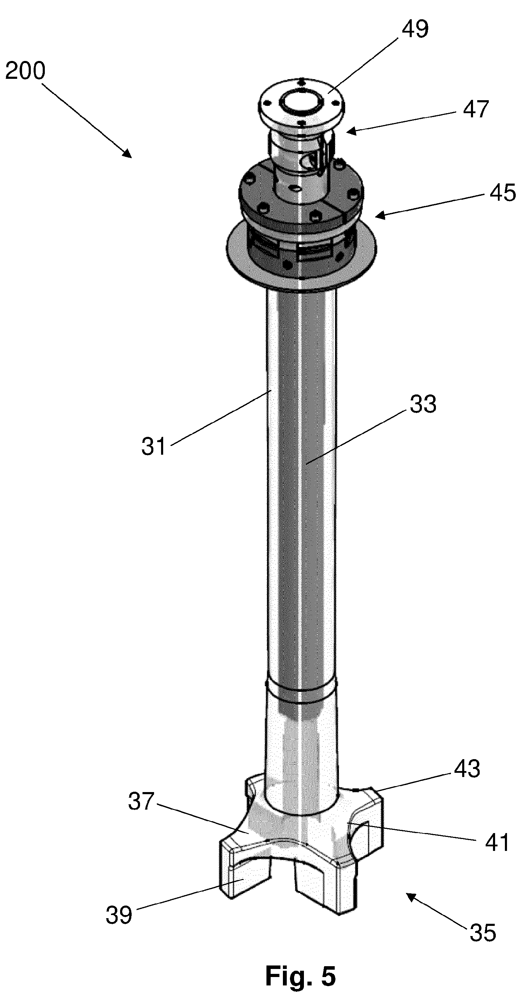

Figure 5 shows a rotary device 200 according to another embodiment of the present invention. The rotary device 200 comprises a tubular sleeve 31 and a hollow shaft 33. The tubular sleeve 31 and hollow shaft 33 are generally the same as the tubular sleeve 1 and hollow shaft 3 shown in Figures 1-4, except that the tubular sleeve 1 comprises a rotor head 35 having a single-plate design. The rotor head 35 comprises a planar surface (or plate) 37 extending perpendicular to the longitudinal axis A of the tubular sleeve 31, with vanes 39 projecting from the base of the plate 37. The plate 37 is generally square in shape, with concave edges 41 and truncated corners 43.

The rotary device 200 comprises clamping means 45 for securing the tubular sleeve 31 to the hollow shaft 33. The rotary device 200 further comprises a collar 47 which fits around the second end of the hollow shaft 33. The collar provides a flange 49 which is configured to couple the rotary device 200 to a rotating apparatus (for example, as shown in Figure 7).

Figure 6 shows a cross-sectional view of the rotary device 200 shown in Figure 5. The first end of the hollow shaft 33 is enclosed within the tubular sleeve 31 and comprises a locking portion 51 which engages with a complementary receiving portion 53 in the tubular sleeve 31. A bore 55 extends through the hollow shaft 33 and is fluidly connected to the gas outlet 57 of the rotor head 35 by conduits 59, 61.

The second end of the hollow shaft 33 comprises a circumferential groove 63 which engages with the collar 47. The clamping means 45 secure the tubular sleeve 31 to the hollow shaft 33 in conjunction with the collar 47.

Figure 7 shows a rotary device 300 according to an embodiment of the present invention, assembled with an apparatus 302 for rotating the rotary device 300 and injecting a gas and/or metal treatment additive into molten metal through the rotary device 300. In use, the rotary device 300 is lowered into a ladle 304 (or furnace). The ladle 304 may be charged with molten metal either before or after the rotary device 300 is lowered in. The rotary device 300 is then used to treat the molten metal, for example using a method in accordance with the present invention.

### Example 1

A rotary device according to an embodiment of the present invention was made with a hollow shaft comprising graphite and a tubular sleeve comprising fused silica. The tubular sleeve comprised an integrally formed rotor head. The length of the tubular sleeve as measured along its longitudinal axis was 123 cm (not including the rotor head).

The graphite shaft extended into the tubular sleeve along 100 cm of the length of the tubular sleeve. The maximum diameter of the graphite shaft was 7.6 cm. The tubular sleeve had a maximum diameter of 11.6 cm and a wall thickness of 1.6 cm.

The rotor head had a standard dual-plate design, comprising two parallel, square-shaped plate having concave edges and truncated corners, connected by four pillars. The first plate comprised a centrally-located bore for discharging gas into molten metal. The diameter of the plates was 25 cm.

The rotary device was successfully used for treating molten metal. Repeated use eventually resulted in some warping and distortion of the rotor head due to slight softening of the fused silica, which reduced stirring efficiency.

### Example 2

Another rotary device according to an embodiment of the present invention was made with a hollow shaft comprising graphite and a tubular sleeve comprising VISO^{™} isostatically-pressed carbon-bonded alumina. The dimensions of the rotary device were the same as those of the rotary device in Example 1.

The dual-plate rotor design of Example 1 was found to pose some difficulties in manufacturing by isopressing, with full densification not always achieved across the entire rotor head. The rotary device of Example 2 therefore comprised a modified rotor head design comprising a single plate and vanes. The plate was generally square-shaped, having concave edges and truncated corners, and four vanes extending from the base of the plate at each of the corners. The plate comprised a centrally-located bore for discharging gas into molten metal. The diameter of the plate was 25 cm.

The rotary device of Example 2 was successfully used for treating molten metal 18 times without any sign of deformation and minimal indication of wear. However, a heavy build-up of slag on the rotary device began to reduce stirring efficiency. The graphite shaft showed no signs of failure, and so the graphite shaft was still fit for further use with a replacement outer sleeve. The graphite shaft was found to last for at least 50 uses without failure.

### Flow pattern simulations

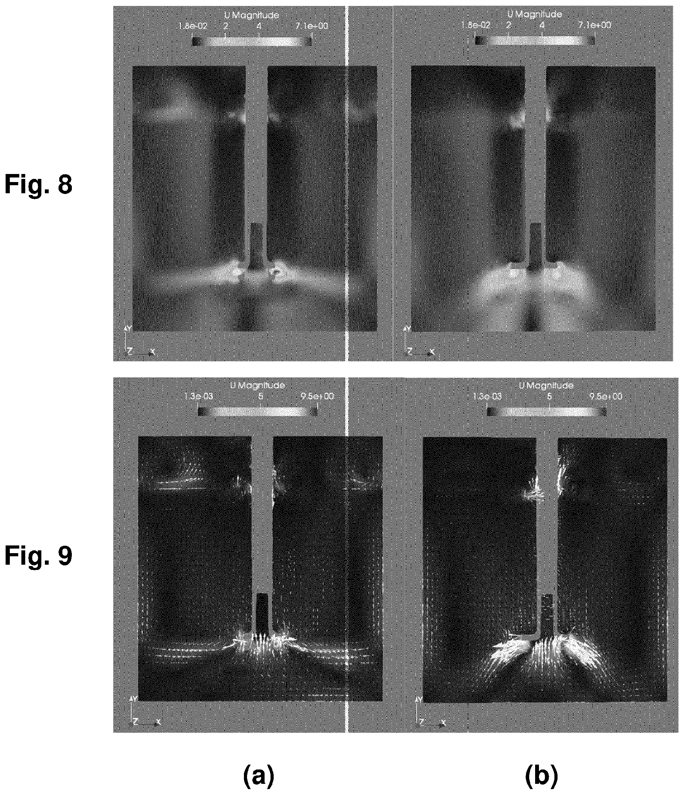

Flow pattern simulations were performed using OpenFoam^{®} software to compare the velocity and direction of flow exhibited by the single-plate and dual-plate rotor designs in molten steel, at various different rotation speeds. The results are shown in Figures 8-10.

Figure 8 shows the velocity field after spinning the dual-plate rotor (a) and single-plate rotor (b) for 15 seconds at 600 rpm, while Figure 9 shows the scaled flow pattern. The peak flow velocity achieved by both designs was similar. However, the direction of flow was slightly different, with the exit flow from the dual-plate rotor being mostly horizontal, while the single-plate design showed more downward directed flow. Both rotor designs showed good simulated stirring performance in molten steel, although the single-plate rotor showed slighted higher torque than the dual-plate design (271 N.m for the single-plate rotor compared with 235 N.m for the dual-plate rotor).

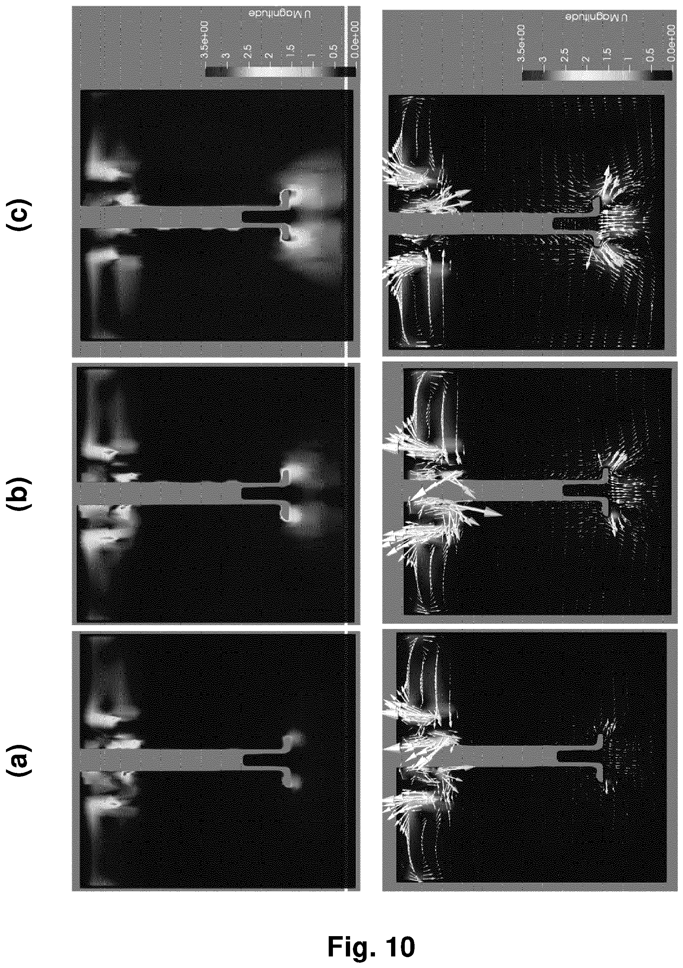

Figure 10 shows the velocity field and scaled flow pattern after spinning the single-plate rotor for 15 seconds at (a) 100 rpm, (b) 200 rpm and (c) 300 rpm. Stirring performance was shown to increase with increasing rotation speed.

### Inclusion removal and desulphurisation

A method according to an embodiment of the present invention was tested against a standard method for desulphurisation.

In the standard method (Method 1), molten steel was tapped into a pouring ladle from a coreless induction furnace (CIF), electric arc furnace (EAF), or both. In the case of both, the metal from the CIF was tapped before the metal from the EAF. A cored wire comprising aluminium and a cored wire comprising SiCaBa was fed into the molten steel. Argon gas was flushed through the molten steel using a porous plug for 5-20 minutes.

In the method of the present invention (Method 2), molten steel was tapped into a pouring ladle in the same way as Method 1. A cored wire comprising aluminium and a cored wire comprising SiCa were fed into the molten steel. The rotary device of Example 2 was used to discharge argon and stir the metal at 200-240 rpm for 5-15 minutes.

Methods 1 and 2 were performed multiple times with different quantities of molten steel, from 2.5 to 18 tons. Samples of molten steel treated by each method were analysed for their inclusion content using a Spark-DAT analysis method on a Thermo Scientific^{™} ARL 4460 spectrometer. The Spark-DAT analysis method involves hitting a sample area with a single spark. If a solid inclusion is present in the position stuck by the spark, a spectrometer peak is generated. This process is repeated across the sample area. The number of inclusions in the sample area can then be determined by counting the number of peaks generated. The average inclusion content for Methods 1 and 2 was calculated by taking the mean average inclusion content from the multiple repeat procedures mentioned above. The results are presented in Table 1.

**Table 1**

| | Average inclusion content | | | | | | | |
|---|---|---|---|---|---|---|---|---|
| Method | AlO | CaO | MnO | MgO | SiO | AlCaO | CaMgO | MgAlO |
| 1 | 18.8 | 35.9 | 0.1 | 2.8 | 0.4 | 16.9 | 2.4 | 2.4 |
| 2 | 14.0 | 30.7 | 0.1 | 2.1 | 0.2 | 11.9 | 1.2 | 1.2 |
| Ratio 2:1 | 0.74 | 0.86 | 0.72 | 0.74 | 0.41 | 0.71 | 0.49 | 0.49 |

Molten steel treated with Method 2 contained, on average, 14-30% fewer small inclusions and 50-60% fewer large inclusions than molten steel treated with Method 1 (the standard purge plug treatment).

Molten steel treated with Method 2 was also found to contain significantly lower amounts of sulfur than molten steel treated with Method 1. Using Method 1, the typical sulfur content was around 100 ppm from an EAF and 70 ppm from a CIF. Using Method 2, the sulphur content was reduced to around 20 ppm.

As a result of the improved inclusion removal achieved by Method 2, pouring temperatures for the molten metal were reduced by 20-30 °C compared with the standard method, providing a significant energy saving. The lower metal temperature also reduces wear on the refractory articles (thereby increasing their longevity) and reduces liquid shrinkage in the casting as it solidifies, as well as reducing reoxidation at the surface of the metal.

## Claims

1. A rotary device (100, 200) for treating a molten ferrous metal with gas, the device comprising:
a tubular sleeve (1, 31) comprising a rotor head (5, 35) at one end, the rotor head (5, 35) comprising a gas outlet (13, 57) for dispersing gas into molten ferrous metal; and
a hollow shaft (3, 33) extending inside the tubular sleeve (1, 31) such that a first end of the hollow shaft (3, 33) is enclosed by the tubular sleeve (1, 31) and comprises a locking portion (23, 51) configured to engage with a complementary receiving portion (25, 53) inside the tubular sleeve (1, 31),
wherein the hollow shaft (3, 33) is fluidly connected to the gas outlet (13, 57) of the rotor head (5, 35),
the tubular sleeve (1, 31) is formed from a refractory material that is resistant to corrosion and thermal shock, and
the hollow shaft (3, 33) is formed from graphite and the tubular sleeve (1, 31) is formed from a refractory material more resistant to corrosion and thermal shock, wherein the locking portion (23, 51) and the receiving portion (25, 53) have a polygonal cross-section or a cross-section which is circular with chords removed.

2. The rotary device of claim 1, wherein the tubular sleeve (1, 31) is formed from a refractory material comprising fused silica; alumina; silicon carbide; carbon-bonded alumina; carbon-bonded ceramics; clay graphite; silicon alumina nitride; isopressed refractory mixtures comprising metal oxides, carbides, or nitrides; isopressed carbon-bonded alumina; refractory substrates coated with alumina and/or magnesium zirconates or metal oxides; or a combination thereof.

3. The rotary device of any one of the preceding claims, wherein the rotor head (5, 35) is integrally formed with the tubular sleeve (1, 31) or wherein the rotor head (5, 35) is coupled to the end of the tubular sleeve (1, 31).

4. The rotary device of any one of the preceding claims, wherein the hollow shaft (3, 33) has a first end and a second end, and wherein the second end of the hollow shaft (3, 33) is configured to be coupled to an apparatus (302) for rotating the rotary device.

5. The rotary device of claim 4, wherein the complementary receiving portion (25, 53) is located at the end of the tubular sleeve (1, 31) comprising the rotor head (5, 35).

6. The rotary device of any one of the preceding claims, wherein the cross-section comprises at least 3, 4, 5 or 6 vertices.

7. A tubular sleeve (1, 31) for use with the rotary device of any one of the preceding claims, the tubular sleeve (1, 31) comprising a complementary receiving portion (25, 53) inside the tubular sleeve and being formed from a refractory material more resistant to corrosion and thermal shock than graphite; wherein the receiving portion (25, 53) is configured to engage with a complementary locking portion (23, 51) on a hollow shaft; wherein the receiving portion (25, 53) has a polygonal cross-section or wherein the receiving portion (25, 53) and the locking portion (23, 51) have a cross-section which is circular with chords removed.

8. A method for treating molten metal, the method comprising:
applying a layer of synthetic slag material onto an exposed surface of the molten metal; and
stirring the molten metal using a rotary device according to any one of claims 1 to 6, such that the molten metal flows past the layer of synthetic slag material.

9. The method of claim 8, further comprising dispersing gas into the molten metal through the rotor head (5, 35).

10. The method of claim 8 or claim 9, wherein the synthetic slag comprises calcium oxide.

11. The method of any one of claims 8 to 10, wherein the method further comprises feeding a cored wire comprising a metal treatment additive into the molten metal, optionally wherein the cored wire comprises an outer sheath comprising a high melting point metal, and an inner core comprising the metal treatment additive, optionally wherein the metal treatment additive comprises magnesium, ferrosilicon magnesium, calcium, calcium oxide, calcium carbide, or combinations thereof.

12. The method of any one of claims 8 to 11, wherein the method comprises discharging a metal treatment additive through the rotor head (5, 35), optionally a solid metal treatment additive.

13. A method for treating molten ferrous metal comprising:
applying a metal treatment agent to molten metal;
stirring the molten metal using a rotary device according to any one of claims 1 to 6; and
discharging gas into the molten metal through the rotor head (5, 35).

14. The method of any one of claims 8 to 13, wherein the molten metal is steel or iron.

15. The use of a rotary device according to any one of claims 1 to 6 in the treatment of molten ferrous metal.

## Patentansprüche

1. Drehvorrichtung (100, 200) zum Behandeln von geschmolzenem Eisenmetall mit Gas, wobei die Vorrichtung umfasst:
eine rohrförmige Hülse (1, 31), die einen Rotorkopf (5, 35) an einem Ende umfasst, wobei der Rotorkopf (5, 35) einen Gasauslass (13, 57) zum Dispergieren von Gas in geschmolzenes Eisenmetall umfasst; und
eine Hohlwelle (3, 33), die sich innerhalb der rohrförmigen Hülse (1, 31) erstreckt, sodass ein erstes Ende der Hohlwelle (3, 33) von der rohrförmigen Hülse (1, 31) umschlossen ist und einen Verriegelungsabschnitt (23, 51) umfasst, der konfiguriert ist, um mit einem komplementären Aufnahmeabschnitt (25, 53) innerhalb der rohrförmigen Hülse (1, 31) in Eingriff zu gelangen,
wobei die Hohlwelle (3, 33) fluidisch mit dem Gasauslass (13, 57) des Rotorkopfes (5, 35) verbunden ist,
die rohrförmige Hülse (1, 31) aus einem feuerfesten Material gebildet ist, das korrosions- und temperaturschockbeständig ist, und
die Hohlwelle (3, 33) aus Graphit gebildet ist und die rohrförmige Hülse (1, 31) aus einem feuerfesten Material gebildet ist, das korrosions- und temperaturschockbeständiger ist, wobei der Verriegelungsabschnitt (23, 51) und der Aufnahmeabschnitt (25, 53) einen polygonalen Querschnitt oder einen Querschnitt aufweisen, der kreisförmig mit entfernten Sehnen ist.

2. Drehvorrichtung nach Anspruch 1, wobei die rohrförmige Hülse (1, 31) aus einem feuerfesten Material gebildet ist, das Quarzglas; Aluminiumoxid; Siliciumcarbid; kohlenstoffgebundenes Aluminiumoxid; kohlenstoffgebundene Keramik; Tongraphit; Siliciumaluminiumnitrid; isogepresste feuerfeste Mischungen; die Metalloxide, -carbide oder -nitride umfassen, isogepresstes kohlenstoffgebundenes Aluminiumoxid; feuerfeste Substrate, die mit Aluminiumoxid und/oder Magnesiumzirkonaten oder Metalloxiden beschichtet sind; oder eine Kombination davon umfasst.

3. Drehvorrichtung nach einem der vorstehenden Ansprüche, wobei der Rotorkopf (5, 35) in einem Stück mit der rohrförmigen Hülse (1, 31) gebildet ist oder wobei der Rotorkopf (5, 35) mit dem Ende der rohrförmigen Hülse (1, 31) gekoppelt ist.

4. Drehvorrichtung nach einem der vorstehenden Ansprüche, wobei die Hohlwelle (3, 33) ein erstes Ende und ein zweites Ende aufweist und wobei das zweite Ende der Hohlwelle (3, 33) konfiguriert ist, um mit einer Einrichtung (302) zum Drehen der Drehvorrichtung gekoppelt zu werden.

5. Drehvorrichtung nach Anspruch 4, wobei sich der komplementäre Aufnahmeabschnitt (25, 53) am Ende der rohrförmigen Hülse (1, 31) befindet, die den Rotorkopf (5, 35) umfasst.

6. Drehvorrichtung nach einem der vorstehenden Ansprüche, wobei der Querschnitt mindestens 3, 4, 5 oder 6 Scheitelpunkte umfasst.

7. Rohrförmige Hülse (1, 31) zur Verwendung mit der Drehvorrichtung nach einem der vorstehenden Ansprüche, wobei die rohrförmige Hülse (1, 31) einen komplementären Aufnahmeabschnitt (25, 53) im Inneren der rohrförmigen Hülse umfasst und aus einem feuerfesten Material gebildet ist, das korrosions- und thermoschockbeständiger als Graphit ist; wobei der Aufnahmeabschnitt (25, 53) konfiguriert ist, um mit einem komplementären Verriegelungsabschnitt (23, 51) auf einer Hohlwelle in Eingriff zu gelangen; wobei der Aufnahmeabschnitt (25, 53) einen polygonalen Querschnitt aufweist oder wobei der Aufnahmeabschnitt (25, 53) und der Verriegelungsabschnitt (23, 51) einen Querschnitt aufweisen, der kreisförmig mit entfernten Sehnen ist.

8. Verfahren zum Behandeln von geschmolzenem Metall, wobei das Verfahren umfasst:
Aufbringen einer Schicht aus synthetischem Schlackenmaterial auf eine freiliegende Oberfläche des geschmolzenen Metalls; und
Rühren des geschmolzenen Metalls unter Verwendung einer Drehvorrichtung nach einem der Ansprüche 1 bis 6, sodass das geschmolzene Metall an der Schicht aus synthetischem Schlackenmaterial vorbeifließt.

9. Verfahren nach Anspruch 8, weiter umfassend Dispergieren von Gas in das geschmolzene Metall durch den Rotorkopf (5, 35).

10. Verfahren nach Anspruch 8 oder 9, wobei die synthetische Schlacke Calciumoxid umfasst.

11. Verfahren nach einem der Ansprüche 8 bis 10, wobei das Verfahren weiter Zuführen eines Fülldrahtes, der ein Metallbehandlungsadditiv umfasst, in das geschmolzene Metall umfasst, wobei der Fülldraht optional einen äußeren Mantel umfasst, der ein Metall mit hohem Schmelzpunkt und einen inneren Kern umfasst, der das Metallbehandlungsadditiv umfasst, wobei das Metallbehandlungsadditiv optional Magnesium, Ferrosiliciummagnesium, Calcium, Calciumoxid, Calciumcarbid oder Kombinationen davon umfasst.

12. Verfahren nach einem der Ansprüche 8 bis 11, wobei das Verfahren Abgeben eines Metallbehandlungsadditivs durch den Rotorkopf (5, 35), optional eines festen Metallbehandlungsadditivs, umfasst.

13. Verfahren zum Behandeln von geschmolzenem Eisenmetall, umfassend:
Aufbringen eines Metallbehandlungsmittels auf geschmolzenes Metall;
Rühren des geschmolzenen Metalls unter Verwendung einer Drehvorrichtung nach einem der Ansprüche 1 bis 6; und
Abgeben von Gas durch den Rotorkopf (5, 35) in das geschmolzene Metall.

14. Verfahren nach einem der Ansprüche 8 bis 13, wobei das geschmolzene Metall Stahl oder Eisen ist.

15. Verwendung einer Drehvorrichtung nach einem der Ansprüche 1 bis 6 bei der Behandlung von geschmolzenem Eisenmetall.

## Revendications

1. Dispositif rotatif (100, 200) pour le traitement d'un métal ferreux en fusion par gaz, le dispositif comprenant :
un manchon tubulaire (1, 31) comprenant une tête de rotor (5, 35) à une extrémité, la tête de rotor (5, 35) comprenant une sortie de gaz (13, 57) pour disperser le gaz dans le métal ferreux en fusion ; et
un arbre creux (3, 33) s'étendant à l'intérieur du manchon tubulaire (1, 31) de sorte qu'une première extrémité de l'arbre creux (3, 33) soit entourée par le manchon tubulaire (1, 31) et comprenne une partie de verrouillage (23, 51) configurée pour se mettre en prise avec une partie de réception complémentaire (25, 53) à l'intérieur du manchon tubulaire (1, 31),
dans lequel l'arbre creux (3, 33) est en communication fluidique avec la sortie de gaz (13, 57) de la tête de rotor (5, 35),
le manchon tubulaire (1, 31) est formé d'un matériau réfractaire résistant à la corrosion et aux chocs thermiques, et
l'arbre creux (3, 33) est formé de graphite et le manchon tubulaire (1, 31) est formé d'un matériau réfractaire plus résistant à la corrosion et aux chocs thermiques, dans lequel la partie de verrouillage (23, 51) et la partie de réception (25, 53) présentent une section transversale polygonale ou une section transversale qui est circulaire en ayant retiré des cordes.

2. Dispositif rotatif selon la revendication 1, dans lequel le manchon tubulaire (1, 31) est formé d'un matériau réfractaire comprenant de la silice fondue ; de l'alumine ; du carbure de silicium ; de l'alumine liée au carbone ; des céramiques liées au carbone ; du graphite argileux ; du nitrure d'alumine et de silicium ; des mélanges réfractaires pressés de manière isostatique comprenant des oxydes, des carbures ou des nitrures métalliques ; de l'alumine liée au carbone pressée de manière isostatique ; des substrats réfractaires revêtus de zirconates de magnésium et/ou d'alumine ou d'oxydes métalliques; ou une combinaison de ceux-ci.

3. Dispositif rotatif selon l'une quelconque des revendications précédentes, dans lequel la tête de rotor (5, 35) est formée intégralement avec le manchon tubulaire (1, 31) ou dans lequel la tête de rotor (5, 35) est couplée à l'extrémité du manchon tubulaire (1, 31).

4. Dispositif rotatif selon l'une quelconque des revendications précédentes, dans lequel l'arbre creux (3, 33) présente une première extrémité et une seconde extrémité, et dans lequel la seconde extrémité de l'arbre creux (3, 33) est configurée pour être couplée à un appareil (302) pour faire tourner le dispositif rotatif.

5. Dispositif rotatif selon la revendication 4, dans lequel la partie de réception complémentaire (25, 53) est située à l'extrémité du manchon tubulaire (1, 31) comprenant la tête de rotor (5, 35).

6. Dispositif rotatif selon l'une quelconque des revendications précédentes, dans lequel la section transversale comprend au moins 3, 4, 5 ou 6 sommets.

7. Manchon tubulaire (1,31) destiné à être utilisé avec le dispositif rotatif selon l'une quelconque des revendications précédentes, le manchon tubulaire (1, 31) comprenant une partie de réception complémentaire (25, 53) à l'intérieur du manchon tubulaire et étant formé d'un matériau réfractaire plus résistant à la corrosion et aux chocs thermiques que le graphite ; dans lequel la partie de réception (25, 53) est configurée pour se mettre en prise avec une partie de verrouillage complémentaire (23, 51) sur un arbre creux ; dans lequel la partie de réception (25, 53) présente une section transversale polygonale ou dans lequel la partie de réception (25, 53) et la partie de verrouillage (23, 51) présentent une section transversale qui est circulaire en ayant retiré des cordes.

8. Procédé de traitement de métal en fusion, le procédé comprenant :
l'application d'une couche de laitier synthétique sur une surface exposée du métal en fusion ; et
l'agitation du métal en fusion à l'aide d'un dispositif rotatif selon l'une quelconque des revendications 1 à 6, de sorte que le métal en fusion s'écoule au-delà de la couche de matériau de laitier synthétique.

9. Procédé selon la revendication 8, comprenant en outre la dispersion de gaz dans le métal en fusion à travers la tête de rotor (5, 35).

10. Procédé selon la revendication 8 ou la revendication 9, dans lequel le laitier synthétique comprend de l'oxyde de calcium.

11. Procédé selon l'une quelconque des revendications 8 à 10, dans lequel le procédé comprend en outre l'introduction d'un fil fourré comprenant un additif de traitement de métal dans le métal en fusion, éventuellement dans lequel le fil fourré comprend une gaine extérieure comprenant un métal à point de fusion élevé et un noyau intérieur comprenant l'additif de traitement de métal, éventuellement dans lequel l'additif de traitement de métal comprend du magnésium, du ferrosilicium-magnésium, du calcium, de l'oxyde de calcium, du carbure de calcium ou des combinaisons de ceux-ci.

12. Procédé selon l'une quelconque des revendications 8 à 11, dans lequel le procédé comprend la décharge d'un additif de traitement de métal à travers la tête de rotor (5, 35), éventuellement d'un additif de traitement de métal solide.

13. Procédé de traitement de métal ferreux en fusion comprenant :
l'application d'un agent de traitement de métal sur du métal en fusion ;
l'agitation du métal en fusion à l'aide d'un dispositif rotatif selon l'une quelconque des revendications 1 à 6 ; et
la décharge du gaz dans le métal en fusion à travers la tête de rotor (5, 35).

14. Procédé selon l'une quelconque des revendications 8 à 13, dans lequel le métal en fusion est de l'acier ou du fer.

15. Utilisation d'un dispositif rotatif selon l'une quelconque des revendications 1 à 6 dans le traitement de métal ferreux en fusion.
